# EUROPEAN PATENT APPLICATION

(11) **EP 2 735 878 A1**
(43) Date of publication of application: **28.05.2014**
(21) Application number: 13193088.5
(22) Date of filing: 15.11.2013
(51) Int. Cl.: G01P 3/481

(54) **Saddle-straddling type motor vehicle**

(30) Priority: 27.11.2012 JP 2012258882
(71) Applicant: Yamaha Hatsudoki Kabushiki Kaisha, Iwata-shi, Shizuoka 438-8501 (JP)
(72) Inventor: Noguchi, Jun, Shizuoka-ken, 438-8501 (JP)
(74) Representative: Zimmermann, Tankred Klaus

(57) **Abstract**

A crank shaft is provided in a casing to be rotatable relative to the casing. A fan is provided to be integrally rotated with the crank shaft. A rotation angle sensor is arranged outside of the plate of the fan at one end of the crank shaft in the axial direction of the crank shaft on the rotational center axis of the fan. A detector and a portion to be detected of the rotation angle sensor are opposite to each other on the rotational center axis of the fan. One of the detector and the portion to be detected is provided to be integrally rotated with the crank shaft, and the other is provided not to be rotated relative to the casing.

## Description

### BACKGROUND OF THE INVENTION

### Field of the Invention

The present invention relates to a saddle-straddling type motor vehicle.

### Description of Related Art

In a saddle-straddling type motor vehicle such as a motorcycle, a sensor for detecting a rotation angle of a crank shaft is provided in an engine. Further, a fan may be provided to be integrally rotated with the crank shaft to cool the engine.

In the engine described in JP 2004-225543 A, a cooling fan is attached to the one end of the crank shaft. The cooling fan has a bottom plate and a plurality of blades projecting in an axial direction from the bottom plate. A metallic boss plate is formed at the bottom plate. A magnetic coil is provided at an engine main body as a crank angle sensor. Further, a metallic part for operating the magnetic coil is joined to the boss plate.

### BRIEF SUMMARY OF THE INVENTION

In the engine described above, a flow of cooling air produced by the cooling fan is interfered by the magnetic coil and the metallic parts. Thus, cooling efficiency for the engine main body is reduced.

An object of the present invention is to provide a saddle-straddling type motor vehicle that can efficiently cool an engine.
(1) According to one aspect of the present invention, a saddle-straddling type motor vehicle includes a main body having a drive wheel, and an engine that generates power for rotating the drive wheel, wherein the engine includes a casing, a crank shaft provided in the casing to be rotatable relative to the casing, a fan, having a plate provided to be integrally rotated with the crank shaft and a blade provided outside of the plate in an axial direction of the crank shaft, configured such that gas flows into the casing, a rotation angle detector, arranged outside of the plate of the fan and at one end of the crank shaft in the axial direction of the crank shaft on a rotational center axis of the fan, configured to detect a rotation angle of the crank shaft, the rotation angle detector includes a field element and a magnetic sensor arranged to be opposite to each other on the rotational center axis of the fan, one of the field element and the magnetic sensor is provided to be integrally rotated with the crank shaft, and the other one of the field element and the magnetic sensor is provided not to be rotated relative to the casing.

In this saddle-straddling type motor vehicle, the drive wheel is rotated by the power generated by the engine, so that the main body is moved. In the engine, the fan is integrally rotated with the crank shaft. Thus, gas flows into the casing.

The rotation angle detector is arranged outside of the plate of the fan at the one end of the crank shaft in the axial direction of the crank shaft on the rotational center axis of the fan. The field element and the magnetic sensor of the rotation angle detector are opposite to each other on the rotational center axis of the fan. The one of the field element and the magnetic sensor is integrally rotated with the crank shaft, and the other one of the field element and the magnetic sensor is not rotated relative to the casing. The rotation angle of the field element with respect to the magnetic sensor is detected by the magnetic sensor as the rotation angle of the crank shaft with respect to the casing.

If the rotation angle detector is arranged inside of the plate of the fan, the flow of gas into the casing is interfered by the rotation angle detector, and therefore gas is not sufficiently supplied to a region further inside of the rotation angle detector. Therefore, cooling efficiency of the engine is reduced. In contrast, in the present invention, the field element and the magnetic sensor of the rotation angle detector are respectively arranged outside of the plate of the fan on the rotational center axis of the fan. Therefore, the flow of gas formed by the fan is unlikely to be interfered by the rotation angle detector, so that a flow rate of gas is sufficiently ensured in regions inside and outside of the plate of the fan. Thus, the engine can be efficiently cooled. Further, the rotation angle detector is cooled by the flow of gas formed by the fan, so that failure and deterioration of the rotation angle detector due to the generated heat are prevented.
(2) Part of the blade of the fan and part of the one of the field element and the magnetic sensor may be provided to be positioned on a common plane vertical to the axial direction of the crank shaft. In this case, the one of the field element and the magnetic sensor is even more unlikely to interfere with the flow of gas formed by the fan. Further, an increase in size of the engine in the axial direction of the crank shaft is prevented.
(3) The field element and the magnetic sensor do not have to overlap with the blade of the fan in the axial direction of the crank shaft. In this case, the one of the field element and the magnetic sensor is even more unlikely to interfere with the flow of gas formed by the fan.
(4) The casing may have an opening at a position facing the one end of the crank shaft, the engine may further include a heat exchanger provided at the opening of the casing to be opposite to the one end of the crank shaft, and the other one of the field element and the magnetic sensor may be supported by the casing to form a clearance with the heat exchanger.
   In this case, the flow of gas formed by the fan is unlikely to be interfered by the field element and the magnetic sensor, so that the heat exchanger is efficiently cooled by the flow of gas. Further, because a clearance is formed between the other one of the field element and the magnetic sensor, and the heat exchanger, the gas flows into the clearance, and therefore the other one of the field element and the magnetic sensor is efficiently cooled.
(5) The casing may have an opening at a position facing the one end of the crank shaft, the engine may further include a heat exchanger provided at the opening of the casing to be opposite to the one end of the crank shaft, and the other one of the field element and the magnetic sensor may be supported by the heat exchanger.
   In this case, the flow of gas formed by the fan is unlikely interfered by the field element and the magnetic sensor, so that the heat exchanger is efficiently cooled by the flow of gas. Further, because the other one of the field element and the magnetic sensor is supported by the heat exchanger, it is not necessary to separately provide another member for supporting the other one of the field element and the magnetic sensor. Thus, increases in the number of components and the size of the engine are prevented.
(6) The one of the field element and the magnetic sensor may be attached to the one end of the crank shaft via a support member, and the support member may be supported by a bearing member to be rotatable.
   In this case, the support member is supported by the bearing member, so that the posture of the support member is stable. Therefore, the position of the one of the field element and the magnetic sensor is stable, whereby the crank angle can be accurately detected. Further, because the one of the field element and the magnetic sensor is not directly attached to the crank shaft, heat is unlikely to be transmitted from the crank shaft to the one of the field element and the magnetic sensor, and failure and deterioration of the one of the field element and the magnetic sensor due to heat are prevented.
(7) The engine may further include a cover member provided to surround the field element and the magnetic sensor, and at least part of the support member, and the bearing member may be provided between the cover member and the at least part of the support member.
   In this case, surroundings of the field element and the magnetic sensor are covered by the cover member and the bearing member, so that a contaminant such as particles, droplets and the like are prevented from adhering to the field element and the magnetic sensor. As a result, failure and deterioration of the field element and the magnetic sensor are prevented.
   Further, the field element and the magnetic sensor are relatively positioned by the cover member, the support member and the bearing member. Therefore, the positional relationship between the field element and the magnetic sensor is unlikely to be shifted, whereby the crank angle can be stably detected. Further, when the cover member, the support member, the bearing member, the field element and the magnetic sensor are configured to be integrally attachable to one end of the crank shaft, high detection accuracy can be maintained and ease of assembly is improved.
(8) The support member may be configured to be swingable with respect to the rotational center axis of the fan.
   In this case, even when the posture of the crank shaft is not stable due to a positional error or the like, wobbling of the posture of the crank shaft is absorbed by the support member. Therefore, the position of the one of the field element and the magnetic sensor supported by the support member is stably maintained. As a result, the positional relationship between the field element and the magnetic sensor is more unlikely to be shifted, whereby the detection accuracy of the crank shaft is further improved.
(9) The one of the field element and the magnetic sensor may be supported by the plate of the fan.
   In this case, it is not necessary to separately provide another member for supporting the one of the field element and the magnetic sensor. Therefore, increases in the number of components and the size of the engine are prevented. Further, because the one of the field element and the magnetic sensor is not directly attached to the crank shaft, heat is unlikely to be transmitted from the crank shaft to the one of the field element and the magnetic sensor, whereby failure and deterioration of the one of the field element and the magnetic sensor due to heat is prevented.
(10) The engine may further include a rotation conversion device provided inside of the plate of the fan in the axial direction of the crank shaft and convert electric power to rotational force of the crank shaft or convert the rotational force to electric power.
   In this case, a distance between the magnetic sensor and the rotation conversion device is sufficiently ensured, so that malfunction of the magnetic sensor due to the heat generated by the rotation conversion device is sufficiently prevented. Further, the rotation conversion device is cooled by the flow of gas formed by the fan. Thus, failure and deterioration due to the heat generated by the rotation conversion device are prevented.
(11) The rotation conversion device may include a rotor provided to be integrally rotated with the crank shaft and a stator supported by the casing, and the one of the field element and the magnetic sensor may be supported by the rotor.
   In this case, it is not necessary to separately provide another member for supporting the one of the field element and the magnetic sensor. Therefore, increases in the number of components and the size of the engine are prevented.
(12) The rotation conversion device may include a rotor provided to be integrally rotated with the crank shaft, and a stator supported by the casing, and a fastening member may be fastened to the one end of the crank shaft such that the rotor is fixed to the crank shaft, and the one of the field element and the magnetic sensor may be attached to the one end of the crank shaft via the fastening member.
   In this case, the common fastening member is used for fixing the rotor to the crank shaft and attaching the one of the field element and the magnetic sensor to the crank shaft. Thus, an increase in the number of components is prevented.
(13) The field element may be provided to be integrally rotated with the crank shaft, and the magnetic sensor may be provided not to be rotated relative to the casing.

In this case, wiring of the rotation angle detector is prevented from being complicated.

The present invention enables the engine to be efficiently cooled.

Other features, elements, characteristics, and advantages of the present invention will become more apparent from the following description of preferred embodiments of the present invention with reference to the attached drawings.

### BRIEF DESCRIPTION OF THE SEVERAL VIEWS OF THE DRAWING

Fig. 1 is a schematic side view showing the schematic configuration of a motorcycle according to one embodiment of the present invention;
Fig. 2 is a cross sectional view showing the configuration of an engine;
Fig. 3 is an enlarged cross sectional view showing a generator, a fan, a rotation angle sensor and their peripheral portions;
Fig. 4 is a schematic perspective view for explaining the rotation angle sensor;
Fig. 5 is a schematic diagram for explaining an attachment of a sensor cover;
Fig. 6 is a diagram for explaining the flow of gas formed by the fan;
Fig. 7 is a cross sectional view showing another example of an attachment of a hall sensor and a magnet of the rotation angle sensor;
Fig. 8 is a cross sectional view showing another example of the attachment of the hall sensor and the magnet of the rotation angle sensor;
Fig. 9 is a cross sectional view showing another example of the attachment of the hall sensor and the magnet of the rotation angle sensor;
Fig. 10 is a cross sectional view showing another example of the attachment of the hall sensor and the magnet of the rotation angle sensor;
Fig. 11 is a cross sectional view showing another example of a fixing member; and
Fig. 12 is a cross sectional view showing another example of the fixing member.

### DESCRIPTION OF THE PREFERRED EMBODIMENTS

A motorcycle will be described below as one example of a saddle-straddling type motor vehicle according to embodiments of the present invention with reference to the drawings. In the following description, the front, the rear, the left, and the right respectively mean the front, the rear, the left, and the right with respect to a driver of the motorcycle.

### (1) Motorcycle

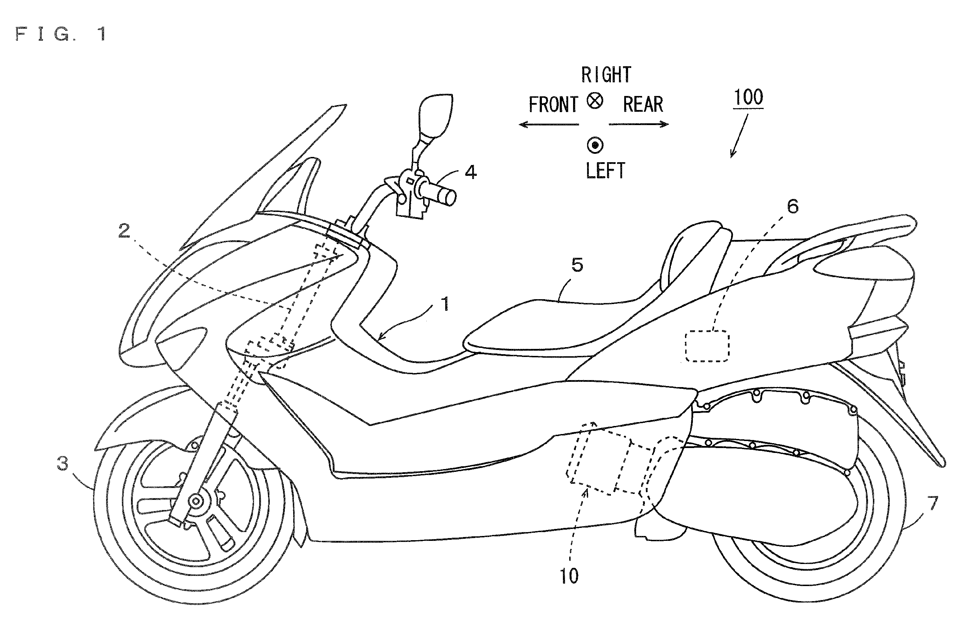

Fig. 1 is a schematic side view showing the schematic configuration of the motorcycle according to one embodiment of the present invention. In the motorcycle 100 of Fig. 1, a front fork 2 is provided at the front of a vehicle body 1 to be swingable to the left and right. A handle 4 is attached to the upper end of the front fork 2, and a front wheel 3 is attached to the lower end of the front fork 2 to be rotatable.

A seat 5 is provided at the upper portion of substantially the center of the vehicle body 1. A control device 6 is arranged at the lower portion behind the seat 5, and an engine 10 is provided below the seat 5. A rear wheel 7 is attached to the lower rear end of the vehicle body 1 to be rotatable. The rear wheel 7 is driven to be rotated by the power generated by the engine 10.

### (2) Configuration of Engine

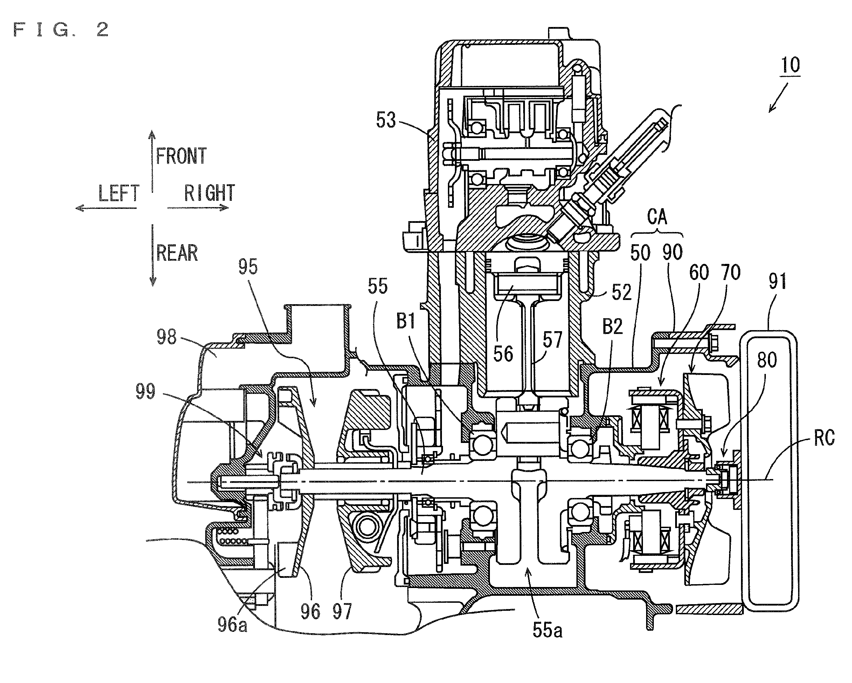

Fig. 2 is a cross sectional view showing the configuration of the engine 10. As shown in Fig. 2, the engine 10 includes a crank case 50, a cylinder 52, a cylinder head 53 and a radiator case 90. The cylinder 52 is provided to project forward from substantially the center of the crank case 50. The cylinder head 53 is attached to the front end of the cylinder 52.

In the crank case 50, a crank shaft 55 is arranged to extend to the left and right. A coupling portion 55a is provided at substantially the center of the crank shaft 55. A piston 56 is arranged in the cylinder 52. The piston 56 is connected to the coupling portion 55a of the crank shaft 55 via a connecting rod 57. Bearing members B1, B2 are arranged to hold the coupling portion 55a therebetween. The crank shaft 55 is supported by the bearing members B1, B2 to be rotatable around a rotational center axis RC with respect to the crank case 50.

A generator 60 and a fan 70 are provided at the crank shaft 55 on the right side of the coupling portion 55a. Further, a rotation angle sensor 80 for detecting a rotation angle (a crank angle) of the crank shaft 55 is arranged on the rotational center axis of the fan 70 at the right-side end of the crank shaft 55. The rotational center axis of the fan 70 matches the rotational center axis RC of the crank shaft 55. Details of the generator 60, the fan 70 and the rotation angle sensor 80 will be described below.

The radiator case 90 is attached to the right end of the crank case 50 to surround the fan 70. A casing CA is constituted by the crank case 50 and the radiator case 90. The right end of the radiator case 90 is opened, and a radiator 91 is attached to the opening to be opposite to the fan 70. Further, a radiator cover (not shown) is provided on the right side of the radiator 91 to cover the radiator 91.

A transmission mechanism 95 is provided at the crank shaft 55 on the left side of the coupling portion 55a. The transmission mechanism 95 includes a pair of sheaves 96, 97 that constitutes one pulley of a CVT (Continuously Variable Transmission). A plurality of blades 96a are provided at the left sheave 96 to project in the left direction. The sheave 96 also functions as a fan for allowing gas (air) to flow into the crank case 50. A gas passage 98 is provided on the left side of the transmission mechanism 95. One end of the gas passage 98 is opened toward the sheave 96, and the other end is opened outward of the crank case 50. The sheave 96 is integrally rotated with the crank shaft 55 such that gas flows into the crank case 50 through the gas passage 98. Thus, inside of the crank case 50 is cooled.

A kick mechanism 99 is connected to the left end of the crank shaft 55. A driver operates a kick pedal (not shown) such that the crank shaft 55 is driven to be rotated via the kick mechanism 99.

### (3) Generator, Fan and Rotation Angle Sensor

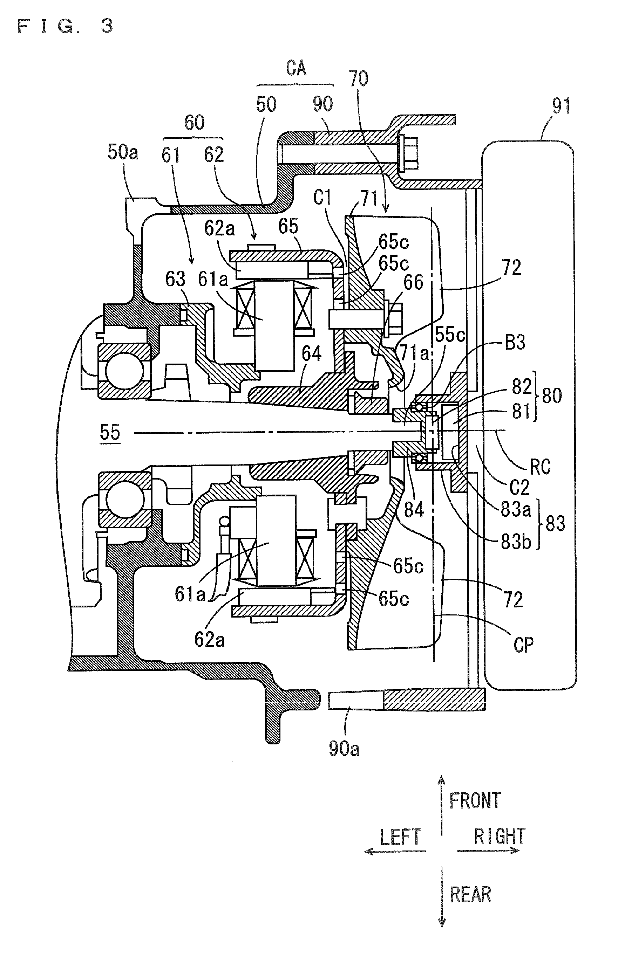

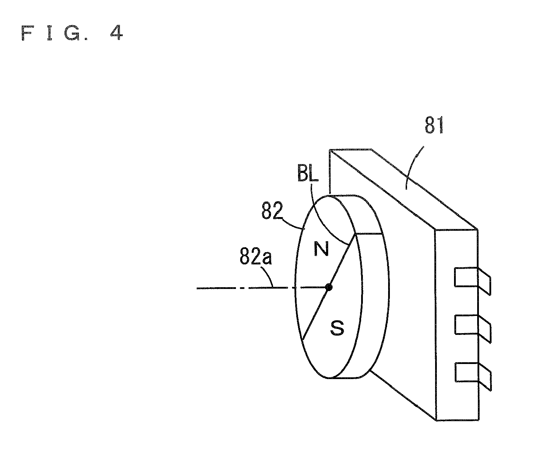

Details of the generator 60, the fan 70 and the rotation angle sensor 80 will be described. Fig. 3 is an enlarged cross sectional view showing the generator 60, the fan 70, the rotation angle sensor 80 and their peripheral portions. Fig. 4 is a schematic perspective view for explaining the rotation angle sensor 80. In the following description, in a plane vertical to the rotational center axis RC of the crank shaft 55, a direction denoted toward the rotational center axis RC is referred to as inward, and a direction opposite to inward is referred to as outward.

As shown in Fig. 3, the generator 60 includes a stator 61 and a rotor 62. The stator 61 includes a plurality of coils 61 a and a fixing member 63. The plurality of coils 61 a are arranged in a circumferential direction with the rotational center axis RC of the crank shaft 55 as a center, and fixed to the crank case 50 via the fixing member 63.

The rotor 62 includes a plurality of magnets 62a and fixing members 64, 65. The fixing member 64 is shaped to be substantially cylindrical and attached to the crank shaft 55. A portion of the crank shaft 55 to which the fixing member 64 is attached is formed to be a tapered shape such that the diameter of the crank shaft 55 is gradually reduced in the right direction. Similarly, the inner peripheral surface of the fixing member 64 is formed such that the diameter of the inner peripheral surface is gradually reduced in the right direction. At the time of assembly, a nut 66 is attached to the crank shaft 55 from the right side of the fixing member 64 while the fixing member 64 is fitted into the tapered portion of the crank shaft 55. The nut 66 is fastened such that the inner peripheral surface of the fixing member 64 abuts against the outer peripheral surface of the tapered portion of the crank shaft 55. Thus, the fixing member 64 is fixed to the crank shaft 55.

The fixing member 65 extends outward in a disk shape from the outer peripheral surface of the fixing member 64, and further cylindrically extends in the left direction to surround the stator 61. The plurality of magnets 62a are fixed to the inner peripheral surface of the fixing member 65 to be arranged in the circumferential direction with the rotational center axis RC of the crank shaft 55 as a center. The fixing member 65 may be integrally formed with the fixing member 64. A plurality of openings 65c are formed at the peripheral edge of the bottom (right end) of the fixing member 65.

The stator 61 is not rotated with respect to the casing CA (the crank case 50 and the radiator case 90). On the other hand, the rotor 62 is integrally rotated with the crank shaft 55 with respect to the casing CA. Therefore, the crank shaft 55 is rotated with respect to the casing CA, whereby the rotor 62 is rotated with respect to the stator 61. Thus, electric power is generated, and the electric power is supplied to a battery (not shown) from the plurality of coils 61 a.

The fan 70 includes a plate 71 and a plurality of blades 72. The plate 71 is provided to extend outward of the fixing member 64 while curving to cover the right end of the fixing member 64. The plate 71 is fixed to the fixing member 65. A clearance C1 is formed between the plate 71 and the peripheral edge of the bottom (right end) of the fixing member 65. The plurality of plate-shaped blades 72 are provided to project in the right direction from the plate 71. An opening 71a is provided at the center of the plate 71. The right end of the crank shaft 55 projects in the right direction through the opening 71 a of the plate 71.

An air passage 50a is provided at the crank case 50 on the left side of the fan 70. Further, an air passage 90a is provided at the radiator case 90 outward from the fan 70.

The rotation angle sensor 80 includes a hall sensor 81 including a plurality of hall elements and a magnet 82. As shown in Fig. 4, the magnet 82 has an N pole and an S pole on one side and the other side of a boundary line BL passing through an axis 82a. In the present embodiment, the magnet 82 is arranged such that the axis 82a of the magnet 82 matches the rotational center axis of the fan 70 (the rotational center axis RC of the crank shaft 55). Further, the hall sensor 81 is arranged to be opposite to the magnet 82 on the rotational center axis RC of the crank shaft 55. A distance between the magnet 82 and the hall sensor 81, the type of the magnet 82 and the like are set such that detectable magnetic flux density or desired magnetic flux density are obtained at the position of the hall sensor 81. The plurality of hall elements are asymmetrically arranged to each other with respect to the axis 82a of the magnet 82 at the position opposite to the magnet 82.

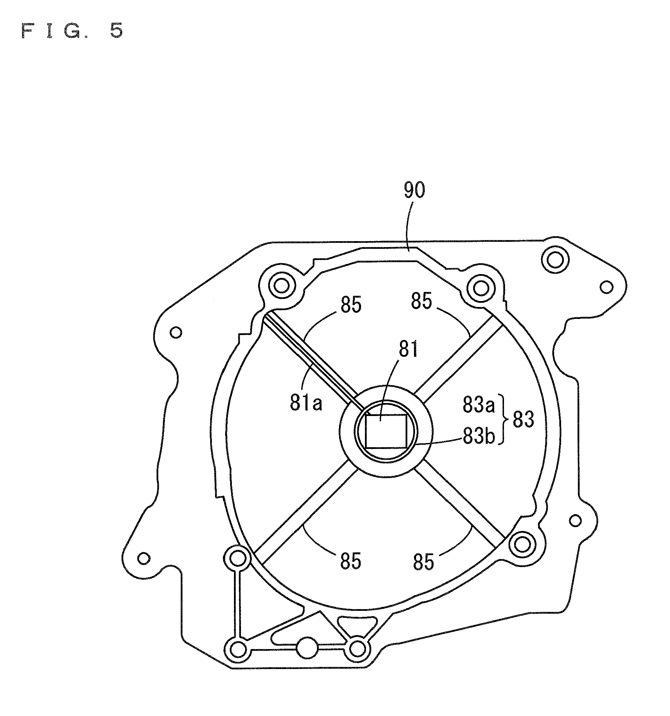

Specifically, as shown in Fig. 3, a sensor cover 83 is arranged on the rotational center axis RC of the crank shaft 55 between the radiator 91 and the plate 71 of the fan 70. Fig. 5 is a schematic diagram for explaining the attachment of the sensor cover 83, and shows the sensor cover 83 and the radiator case 90 viewed from the left side (viewed from the crank shaft 55). As shown in Fig. 5, the sensor cover 83 is coupled to the radiator case 90 via a plurality of long-sized coupling portions 85. Thus, the sensor cover 83 is supported by the casing CA. The sensor cover 83 has a bottom portion 83a and a cylindrical side surface portion 83b. The axis of the side surface portion 83b matches the rotational center axis RC of the crank shaft 55. The hall sensor 81 is fixed on the bottom portion 83a to be surrounded by the side surface portion 83b. A harness 81a is provided to extend outward from the hall sensor 81 via the coupling portion 85. The harness 81a is fixed while overlapping with the coupling portion 85 so as not to interfere with the flow of gas formed by the fan 70. A clearance C2 is formed between the bottom portion 83a of the sensor cover 83 and the radiator 91.

As shown in Fig. 3, a projection 55c that projects in the right direction is provided at the right end of the crank shaft 55. A substantially cylindrical support member 84 is fitted into the projection 55c. The right end of the support member 84 is positioned inward from the side surface portion 83b of the sensor cover 83. The magnet 82 is supported at the right end of the support member 84 to be opposite to the hall sensor 81. Parts of the blades 72 of the fan 70 and part of the magnet 82 are positioned on a common plane CP vertical to the rotational center axis RC. The magnet 82 is attached to the crank shaft 55 via the support member 84.

An annular bearing member B3 is arranged between the inner peripheral surface of the side surface portion 83b of the sensor cover 83 and the outer peripheral surface of the support member 84. The support member 84 is supported by the bearing member B3 to be rotatable in the side surface portion 83b of the sensor cover 83. In this case, the hall sensor 81 and the magnet 82 are arranged in a space sealed by the sensor cover 83, the bearing member B3 and the support member 84. Therefore, a contaminant such as particles and the like is prevented from adhering to the hall sensor 81 and the magnet 82.

The hall sensor 81 is not rotated with respect to the casing CA (the crank case 50 and the radiator case 90). On the other hand, the magnet 82 is integrally rotated with the crank shaft 55 with respect to the casing CA. In this case, voltage signals shifted in phase from each other are generated in the plurality of hall elements as the crank shaft 55 is rotated. Arc-tangent for the ratio of the voltage signals is calculated such that the rotation angle (crank angle) of the crank shaft 55 with respect to the casing CA can be detected. Thus, the hall sensor 81 can detect a crank angle with higher resolution than a conventional crank angle sensor while being light and compact.

The rotation angle of the rotor 62 of the generator 60 corresponds to the crank angle detected by the rotation angle sensor 80. Therefore, it is not necessary to separately provide a sensor for detecting the rotation angle of the rotor 62 of the generator 60.

### (4) Cooling Engine by Fan

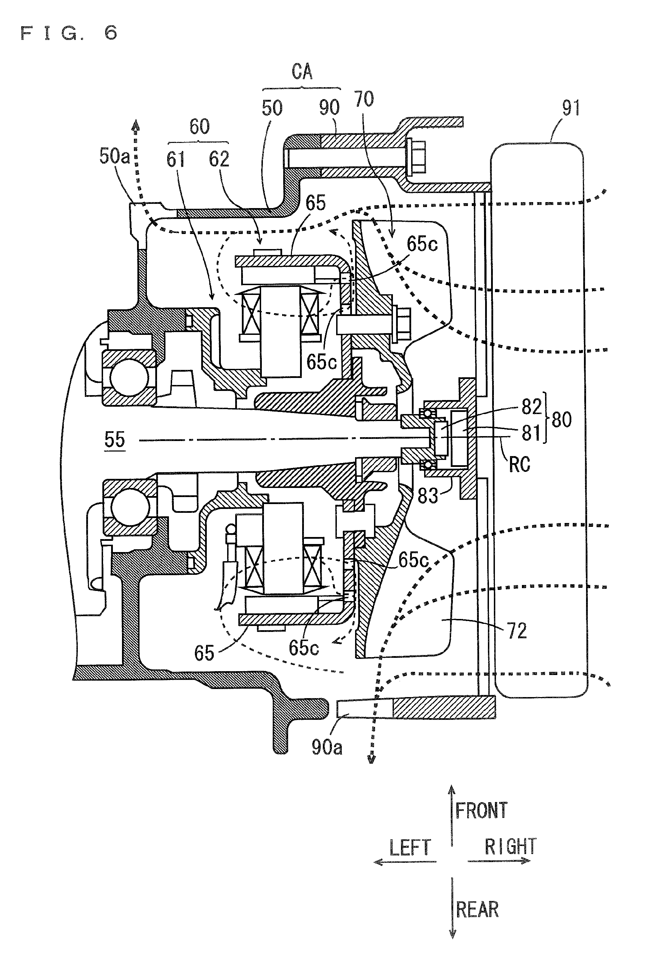

Fig. 6 is a diagram for explaining the flow of gas formed by the fan 70. The fan 70 is integrally rotated with the crank shaft 55. As shown in Fig. 6, a flow of gas (air) along the rotational center axis of the fan 70 (the rotational center axis RC of the crank shaft 55) is formed by the rotation of the fan 70, and the gas flows into the casing CA from outside of the casing CA through the radiator 91. Thus, the radiator 91 is cooled. The gas that has flowed into the casing CA flows through outward of the plate 71 of the fan 70, and flows out of the casing CA through the air passages 50a, 90a. Thus, the heat inside the casing CA is released to outside. Further, part of the gas that has flowed into the casing CA flows through among the plurality of coils 61a, the opening 65c of the fixing member 65 and the clearance C1 (Fig. 3) to circulate in the outward region and inward region of the rotor 62. Thus, the plurality of coils 61a of the stator 61 are cooled.

The gas that flows into the casing CA from outside comes into contact with the sensor cover 83. Thus, the sensor cover 83 is cooled. As a result, the hall sensor 81 and the magnet 82 in the sensor cover 83 are cooled.

### (5) Effects

In the present embodiment, the hall sensor 81 and the magnet 82 of the rotation angle sensor 80 are respectively arranged, outside of the plate 71 of the fan 70 in the axial direction of the crank 55, on the rotational center axis of the fan 70. In this case, the flow of gas formed by the fan 70 is unlikely to be interfered by the rotation angle sensor 80. Thus, a flow rate of the gas is sufficiently ensured in both regions inside and outside of the plate 71 of the fan 70. Therefore, various types of constituent elements of the engine 10 such as the radiator 91, the generator 60 and the like are efficiently cooled. Further, the sensor cover 83 that stores the hall sensor 81 is cooled by the flow of gas formed by the fan 70. Thus, the hall sensor 81 in the sensor cover 83 is cooled. Therefore, malfunction of the hall sensor 81 due to heat is prevented, so that detection accuracy of the crank angle is prevented from being reduced.

Further, in the present embodiment, the sensor cover 83 in which the hall sensor 81 and the magnet 82 are stored is supported by the radiator case 90 via the coupling portion 85. In this case, the sensor cover 83 is spaced apart from the radiator 91, so that the sensor cover 83 and the radiator 91 are efficiently cooled. Thus, the hall sensor 81 and the magnet 82 in the sensor cover 83 are efficiently cooled.

Further, in the present embodiment, the support member 84 that supports the magnet 82 is supported by the bearing member B3 to be rotatable in the side surface portion 83b of the sensor cover 83. This stabilizes the posture of the support member 84 and the position of the magnet 82. Therefore, detection accuracy of the rotation angle of the crank shaft 55 by the rotation angle sensor 80 is improved. Further, because the hall sensor 81 and the magnet 82 are relatively positioned by the sensor cover 83, the support member 84 and the bearing member B3, the positional relationship between the hall sensor 81 and the magnet 82 is unlikely to be shifted, whereby the crank angle can be stably detected.

Further, in the present embodiment, the sensor cover 83, the support member 84, the bearing member B3, the hall sensor 81 and the magnet 82 can be integrally attached to one end of the crank shaft 55. Thus, high detection accuracy is maintained and assembly performance is improved.

Further, in the present embodiment, the hall sensor 81 and the magnet 82 are arranged in a space sealed by the sensor cover 83, the bearing member B3 and the support member 84. This prevents a contaminant such as particles and the like from adhering to the hall sensor 81 and the magnet 82. Therefore, detection accuracy of the crank angle detected by the hall sensor 81 and the magnet 82 is prevented from being reduced.

Further, in the present embodiment, the generator 60 is provided inside of the plate 71 of the fan 70 in the axial direction of the crank shaft 55. In this case, the distance between the hall sensor 81 and the generator 60 is sufficiently ensured, so that abnormality of the hall sensor 81 due to the heat generated by the generator 60 is prevented. Further, the generator 60 is cooled by the flow of gas formed by the fan 70. Thus, failure and deterioration due to the heat generated by the generator 60 are prevented.

Further, in the present embodiment, the hall sensor 81 is provided not to be rotated with respect to the casing CA, and the magnet 82 is provided to be integrally rotated with the crank shaft 55. Thus, wiring of the rotation angle sensor 80 is prevented from being complicated.

### (6) Other Examples of Attachment of Rotation Angle Sensor 80

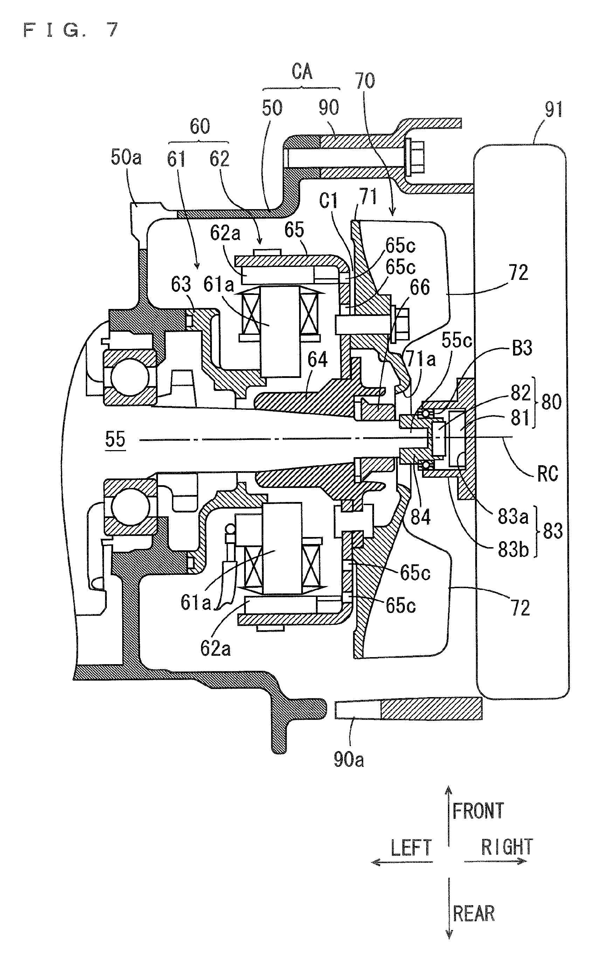

Figs. 7 to 10 are cross sectional views showing other examples of attachment of the hall sensor 81 and the magnet 82 of the rotation angle sensor 80. As for the examples of Figs. 7 to 10, differences from the example of Fig. 3 will be described.

### (6-1)

In the example of Fig. 7, the sensor cover 83 is supported by the radiator 91 instead of being coupled to the radiator case 90 via the coupling portion 85. In this case, the number of components is reduced, and the size of the engine 10 can be reduced.

While the entire bottom portion 83a of the sensor cover 83 is in contact with the radiator 91 in the example of Fig. 7, the sensor cover 83 may be supported by the radiator 91 such that a clearance is formed between the sensor cover 83 and the radiator 91. In this case, the sensor cover 83 and the radiator 91 can be more efficiently cooled.

### (6-2)

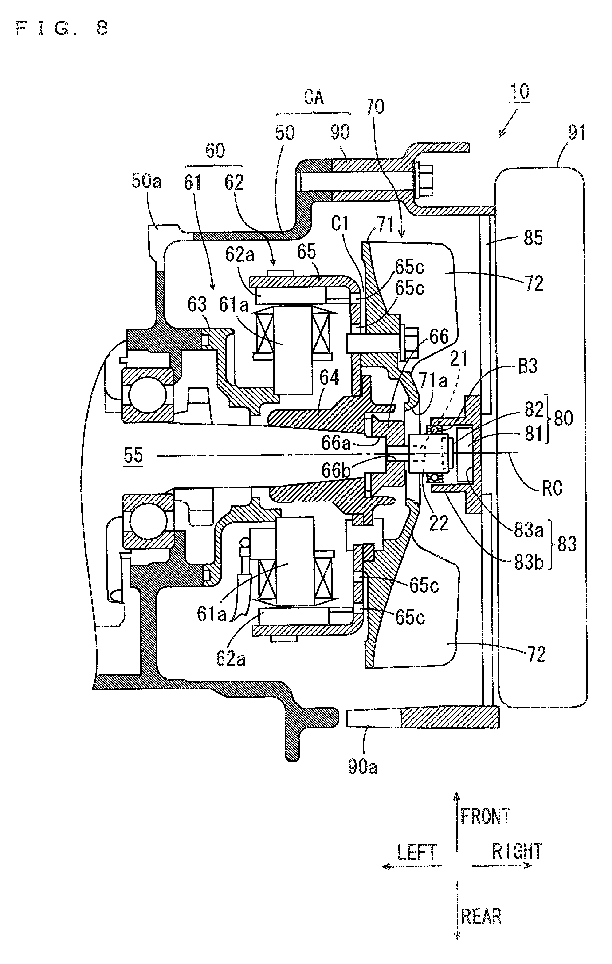

In the example of Fig. 8, the nut 66 has coaxial threaded holes 66a, 66b. The diameter of the threaded hole 66a is larger than the diameter of the threaded hole 66b. The right end of the threaded crank shaft 55 is screwed into the threaded hole 66a from the left side of the nut 66, and the left end of a threaded shaft member 21 is screwed into the threaded hole 66b from the right side of the nut 66. Thus, the shaft member 21 is fixed to the right end of the crank shaft 55 to extend along the rotational center axis RC of the crank shaft. A substantially cylindrical joint member 22 is attached to the right end of the shaft member 21. The shaft member 21 is held by the joint member 22 to be unrotatable in a circumferential direction with respect to the joint member 22 and swingable in a radial direction.

The right end of the joint member 22 is positioned inward from the side surface portion 83b of the sensor cover 83. The joint member 22 is supported by the bearing member B3 to be rotatable in the side surface portion 83b of the sensor cover 83. The magnet 82 is supported by the joint member 22.

The shaft member 21 fixed to the crank shaft 55 is swingable with respect to the joint member 22, and the joint member 22 is supported by the sensor cover 83 and the bearing member B3 with respect to the casing CA in this example, whereby the posture of the joint member 22 is stably maintained even when the rotation posture of the crank shaft 55 is not stabilized. Thus, the position of the magnet 82 is stabilized, so that detection accuracy of the crank angle detected by the rotation angle sensor 80 is improved.

Further, in this example, the magnet 82 is attached to the crank shaft 55 via the nut 66. In this case, the common nut 66 is used to fix the rotor 62 to the crank shaft 55 and to attach the magnet 82 to the crank shaft 55. This prevents an increase in the number of components.

A thread hole may be formed at the right end of the crank shaft 55, and the shaft member 21 may be attached to the thread hole. Alternatively, similarly to the example of Fig. 3, the projection 55c may be provided at the right end of the crank shaft 55, and the joint member 22 may be directly attached to the projection 55c. Further, similarly to the example of Fig. 7, the sensor cover 83 may be supported by the radiator 91 in this example.

### (6-3)

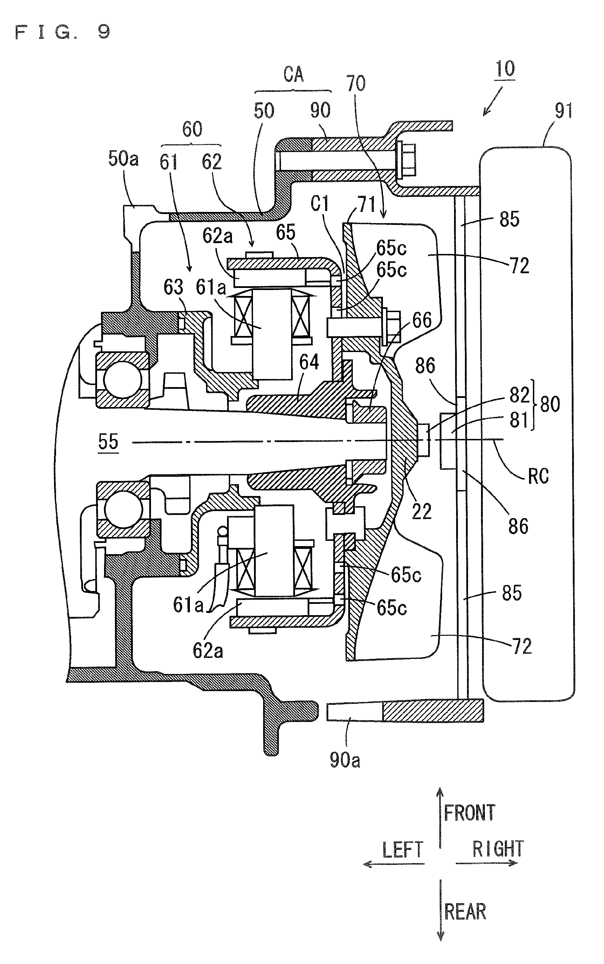

In the example of Fig. 9, the opening 71a is not formed at the plate 71 of the fan 70, and the right end of the crank shaft 55 is covered by the plate 71 of the fan 70. The magnet 82 is supported by the surface of the plate 71 directed in the right direction on the rotational center axis RC of the crank shaft 55.

Further, a platform 86 is coupled to the radiator case 90 via the plurality of coupling portions 85. The hall sensor 81 is fixed on the platform 86 to be opposite to the magnet 82 on the rotational center axis RC of the crank shaft 55.

The sensor cover 83, the bearing member B3 and the support member 84 are not used in this example, so that the number of components is reduced and the size of the engine 10 can be reduced.

The magnet 82 may be integrally formed into the plate 71. Further, the platform 86 and the coupling portion 85 do not have to be provided, and the hall sensor 81 may be supported by the radiator 91.

### (6-4)

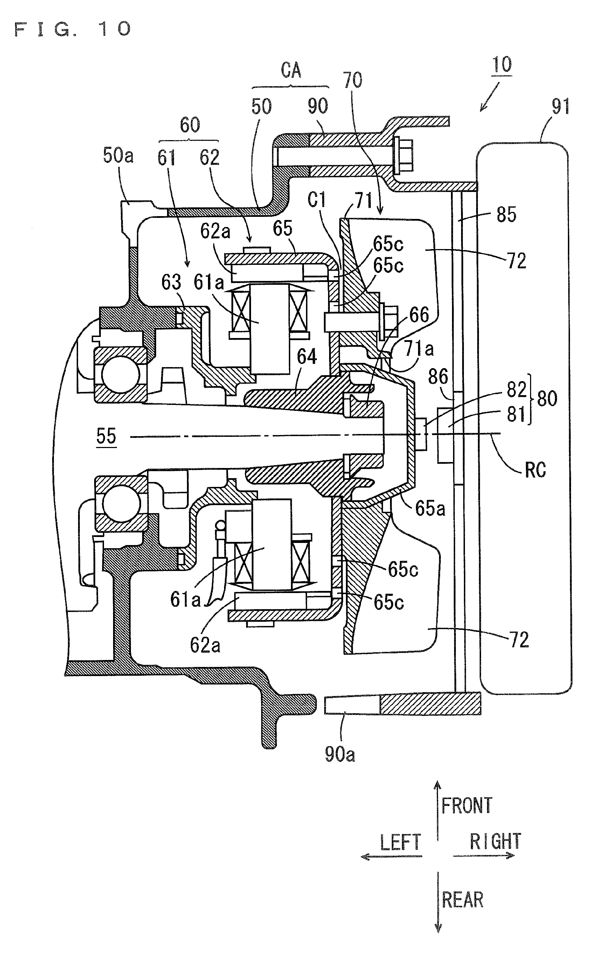

In the example of Fig. 10, the platform 65a is attached to the fixing member 65 of the rotor 62 to cover the right end of the crank shaft 55. The magnet 82 is attached on the platform 65a. Thus, the magnet 82 is supported by the rotor 62.

Further, similarly to the example of Fig. 9, the platform 86 is coupled to the radiator case 90 via the plurality of coupling portions 85. The hall sensor 81 is fixed on the platform 86 to be opposite to the magnet 82 on the rotational center axis RC of the crank shaft 55.

The sensor cover 83, the bearing member B3 and the support member 84 are not used in this example, so that the number of components is reduced and the size of the engine 10 can be reduced.

The magnet 82 may be integrally formed into the platform 65a, and the platform 65a may further be integrally formed into the fixing member 65. Further, the platform 86 and the coupling portion 85 do not have to be provided, and the hall sensor 81 may be supported by the radiator 91.

### (7) Other Examples of Fixing Member

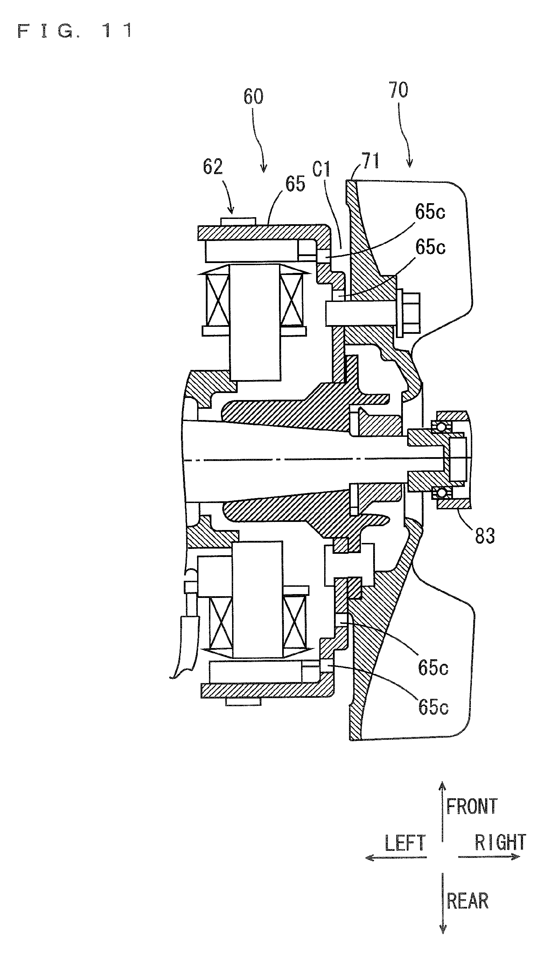

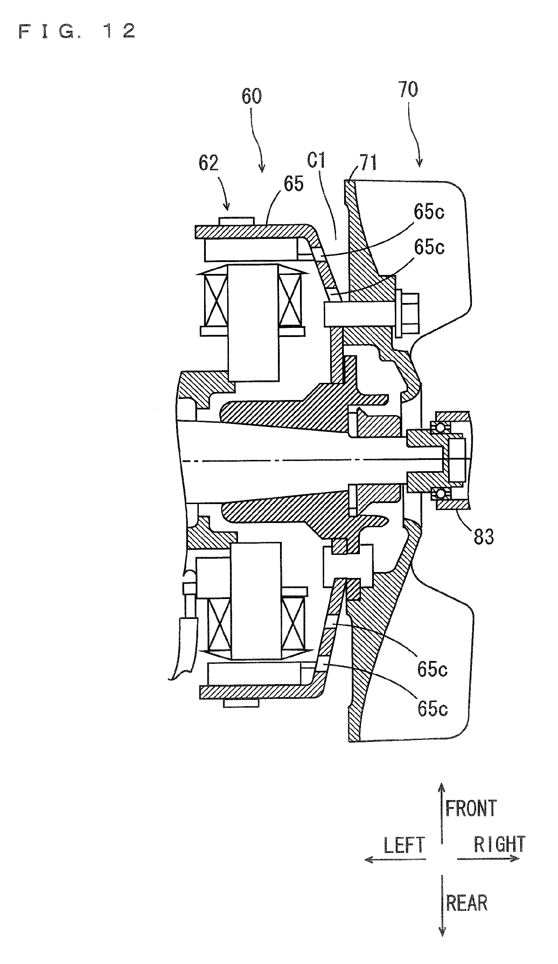

Figs. 11 and 12 are cross sectional views showing other examples of the fixing member 65. As for the examples of Figs. 11 and 12, differences from the example of Fig. 3 will be described.

In the example of Fig. 11, a step is provided at the peripheral edge of the bottom of the fixing member 65 such that the size of the clearance C1 formed between the plate 71 and the bottom (right end) of the fixing member 65 increases outward in steps. In the example of Fig. 12, the peripheral edge of the bottom of the fixing member 65 is provided in a tapered shape such that the size of the clearance C1 formed between the plate 71 and the bottom (right end) of the fixing member 65 gradually increases outward. Thus, the size of the clearance C1 increases outward in steps or gradually, whereby a negative pressure is generated between the plate 71 and the peripheral edge of the bottom of the fixing member 65. Thus, the flow of gas passing through the inside of the generator 60 is efficiently promoted, so that cooling performance of the generator 60 is further improved.

### (8) Other Embodiments

### (8-1)

While the rotation angle sensor 80 is arranged at the right-side end of the crank shaft 55 in the embodiment described above, the invention is not limited to this. When a space is formed due to absence of the kick mechanism 99, for example, the rotation angle sensor 80 may be arranged at the left-side end of the crank shaft 55. In this case, the hall sensor 81 and the magnet 82 are respectively arranged on the rotational center axis of the sheave 96 as a fan, whereby the flow of gas formed by the sheave 96 is unlikely interfered by the hall sensor 81 and the magnet 82. Further, the hall sensor 81 is cooled by the flow of gas formed by the sheave 96. Thus, malfunction of the hall sensor 81 due to heat is prevented. Therefore, detection accuracy of the crank angle is prevented from being reduced.

### (8-2)

While the magnet 82 is provided to be integrally rotated with the crank shaft 55 and the hall sensor 81 is provided not to be rotated with respect to the casing CA in the embodiment described above, the invention is not limited to this. The hall sensor 81 may be provided to be integrally rotated with the crank shaft 55, and the magnet 82 may be provided not to be rotated with respect to the casing CA.

### (8-3)

The generator 60 may function as a starter motor in the embodiment described above. Specifically, electric power is supplied to the plurality of coils 61 a of the stator 61 from a battery (not shown) such that the rotor 62 is rotated. Thus, the crank shaft 55 is driven to be rotated.

### (8-4)

While the embodiment described above is an example in which the present invention is applied to the motorcycle, the invention is not limited to this. The present invention may be applied to another saddle-straddling type motor vehicle such as a three-wheeled automobile, an ATV (All Terrain Vehicle) or the like.

### (9) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the embodiment described above, the motorcycle 100 is an example of a saddle-straddling type motor vehicle, the rear wheel 7 is an example of a drive wheel, the vehicle body 1 is an example of a main body, the engine 10 is an example of an engine, the casing CA is an example of a casing, the crank shaft 55 is an example of a crank shaft, the fan 70 is an example of a fan, the plate 71 is an example of a plate, the blade 72 is an example of a blade, the rotation angle sensor 80 is an example of a rotation angle detector, the magnet 82 is an example of a field element and the hall sensor 81 is an example of a magnetic sensor. Further, the radiator 91 is an example of a heat exchanger, the support member 84 or the joint member 22 is an example of a support member, the bearing member B3 is an example of a bearing member, the sensor cover 83 is an example of a cover member, the generator 60 is an example of a rotation conversion device, the rotor 62 is an example of a rotor, the stator 61 is an example of a stator and the nut 66 is an example of a fastening member.

As each of various elements recited in the claims, various other constituent elements having configurations or functions described in the claims can be also used.

### INDUSTRIAL APPLICABILITY

The present invention can be effectively utilized for various types of a saddle-straddling type motor vehicle.

While preferred embodiments of the present invention have been described above, it is to be understood that variations and modifications will be apparent to those skilled in the art without departing the scope and spirit of the present invention. The scope of the present invention, therefore, is to be determined solely by the following claims.

## Claims

1. A saddle-straddling type motor vehicle (100) comprising:
a main body (1) having a drive wheel (7); and
an engine (10) configured to generate power for rotating the drive wheel (7), wherein
the engine (10) includes
a casing (CA),
a crank shaft (55) provided in the casing (CA) to be rotatable relative to the casing (50),
a fan (70), having a plate (71) provided to be integrally rotated with the crank shaft (55) and a blade (72) provided outside of the plate (71) in an axial direction of the crank shaft (55), configured such that gas flows into the casing (CA),
a rotation angle detector (80), arranged outside of the plate (71) of the fan (70) and at one end of the crank shaft (55) in the axial direction of the crank shaft (55) on a rotational center axis of the fan (70), configured to detect a rotation angle of the crank shaft (55),
the rotation angle detector (80) includes a field element (82) and a magnetic sensor (81) arranged to be opposite to each other on the rotational center axis of the fan (70),
one of the field element (82) and the magnetic sensor (81) is provided to be integrally rotated with the crank shaft (55), and
another one of the field element (82) and the magnetic sensor (81) is provided not to be rotated relative to the casing (CA).

2. The saddle-straddling type motor vehicle (100) according to claim 1, wherein
part of the blade (72) of the fan (70) and part of the one of the field element (82) and the magnetic sensor (81) are provided to be positioned on a common plane vertical to the axial direction of the crank shaft (55).

3. The saddle-straddling type motor vehicle (100) according to claim 1 or 2, wherein
the field element (82) and the magnetic sensor (81) do not overlap with the blade (72) of the fan in the axial direction of the crank shaft (55).

4. The saddle-straddling type motor vehicle according to any one of claims 1 to 3, wherein
the casing (50) has an opening at a position facing the one end of the crank shaft (55),
the engine further includes a heat exchanger (91) provided at the opening of the casing (CA) to be opposite to the one end of the crank shaft (55), and
the other one of the field element (82) and the magnetic sensor (81) is supported by the casing (CA) to form a clearance with the heat exchanger (91).

5. The saddle-straddling type motor vehicle (100) according to any one of claims 1 to 3, wherein
the casing (CA) has an opening at a position facing the one end of the crank shaft (55),
the engine (10) further includes a heat exchanger (91) provided at the opening of the casing (CA) to be opposite to the one end of the crank shaft (55), and
the other one of the field element (82) and the magnetic sensor (81) is supported by the heat exchanger (91).

6. The saddle-straddling type motor vehicle (100) according to any one of claims 1 to 5, wherein
the one of the field element (82) and the magnetic sensor (81) is attached to the one end of the crank shaft (55) via a support member (22, 84), and
the support member (22, 84) is supported by a bearing member (B3) to be rotatable.

7. The saddle-straddling type motor vehicle (100) according to claim 6, wherein
the engine (10) further includes a cover member (83) provided to surround the field element (82) and the magnetic sensor (81), and at least part of the support member (22, 84), and
the bearing member (B3) is provided between the cover member (83) and the at least part of the support member (22, 84).

8. The saddle-straddling type motor vehicle (100) according to claim 7, wherein
the support member (22, 84) is configured to be swingable with respect to the rotational center axis of the fan (70).

9. The saddle-straddling type motor vehicle (100) according to any one of claims 1 to 8, wherein
the one of the field element (82) and the magnetic sensor (81) is supported by the plate (71) of the fan (70).

10. The saddle-straddling type motor vehicle (100) according to any one of claims 1 to 9, wherein
the engine (10) further includes a rotation conversion device (60) provided inside of the plate (71) of the fan (70) in the axial direction of the crank shaft (55) and converts electric power to rotational force of the crank shaft (55) or converts the rotational force of the crank shaft (55) to the electric power.

11. The saddle-straddling type motor vehicle (100) according to claim 10, wherein
the rotation conversion device (60) includes
a rotor (62) provided to be integrally rotated with the crank shaft (55), and
a stator (61) supported by the casing (CA), and
the one of the field element (82) and the magnetic sensor (81) is supported by the rotor (62).

12. The saddle-straddling type motor vehicle (100) according to claim 10, wherein
the rotation conversion device (60) includes
a rotor (62) provided to be integrally rotated with the crank shaft (55), and
a stator (61) supported by the casing (CA), and
a fastening member (66) is fastened to the one end of the crank shaft (55) such that the rotor (62) is fixed to the crank shaft (55), and
the one of the field element (82) and the magnetic sensor (81) is attached to the one end of the crank shaft (55) via the fastening member (66).

13. The saddle-straddling type motor vehicle (100) according to any one of claims 1 to 12, wherein
the field element (82) is provided to be integrally rotated with the crank shaft (55), and
the magnetic sensor (81) is provided not to be rotated relative to the casing (CA).
